# EUROPEAN PATENT APPLICATION

(11) **EP 0 798 500 A1**
(43) Date of publication of application: **01.10.1997**
(21) Application number: 97200836.1
(22) Date of filing: 20.03.1997
(51) Int. Cl.: F16K 27/08

(54) **Valve, especially for building in**

(30) Priority: 29.03.1996 DE 19612494
(71) Applicant: Danfoss A/S, 6430 Nordborg (DK)
(72) Inventor: Callesen, Hans, 6400 Sonderborg (DK); Jacobsen, Kjeld, 8600 Silkeborg (DK)

(57) **Abstract**

The invention concerns a valve, especially for building in, with a housing (2) and a valve insert (3), which is screwed into the housing (2) and which has a coupling profile (4) for an operating element, whereby the housing (2) and the valve insert (3) are bearing against one another at a stop (15).

In such a valve, the alignment of the coupling profile (4) in relation to the housing (2) must be secured in a simple way.

For this purpose the stop (15) comprises a deformation zone (18), which is deformable at least in the axial direction when a predetermined screwing torque is exceeded.

## Description

The invention concerns a valve, especially for building in, with a housing and a valve insert, which is screwed into the housing and which comprises a connection profile for an operating element, whereby the housing and the valve insert are bearing against one another at a stop.

A valve of this kind is known from DE 36 00 130 A1.

In the following the invention will be described on the basis of a radiator valve designed for building in.
However, the invention is not limited to this application purpose.

In valves of this kind, the housing is provided with inlet and outlet connections which can be connected to a radiator and a hot liquid inlet, respectively. The valve insert comprises the movable parts, which are required for the control of a flow of hot liquid through the valve. In some cases the valve insert can also contain the corresponding valve seat.

Valves of this kind are controlled by means of an operating element, which, on radiator valves, is often made as a thermostatic element. The thermostatic element has an device for the setting of a reference value, for instance an adjustment handle, a hand wheel or the like, which is provided with markings, and a stationary part, which is fixed on the valve insert or on the housing. For the setting of the reference value, a marking, corresponding to for instance a desired temperature of 20°C, is brought to overlapping with a stationary marking on the stationary part. A stationary marking of this kind could for instance be an arrow, a triangle or a line. For handling reasons, this stationary marking should have the same positioning on all valves, i.e. for instance point upwards. This will facilitate the handling for the user. Then the user can rely on the fact that it is sufficient to turn the desired value marking to a certain position. He will no longer have to look for the stationary marking, and then bring both markings to overlapping. Additionally, the surface carrying the stationary markings often also carries the name of the manufacturer. For aesthetic and optical reasons it is desired that this name is readable, that is placed horizontally or vertically, not, however, wryly or slopingly.

The operating element is connected to the valve insert via the connection profile. This gives an angular arrangement of the operating element in relation to the valve insert, and thus to the whole valve. In fact, the operating element can in most cases be mounted on the valve insert in a variety of angular positions. However, for an exact positioning, it is necessary in each case that the valve insert is connected to the housing in a way that enables the desired positioning.

In the valve mentioned in the introduction, a ring is therefore provided, which carries the connection profile on its circumferential wall. This ring is kept turnably in relation to the valve insert. The ring has a nose meant for insertion in a corresponding recess in the housing. Later, this will result in the desired positioning of the operating element in relation to the housing. The ring is fixed axially undisplaceable on the valve insert. When screwing the valve insert into the housing this results in an angular fixing. The valve insert can be screwed into the housing with such a torque that the torque exerted on the operating element by the user will not be sufficient to unscrew the valve insert from the housing.

An additional ring on the valve insert, which is fixed turnably, but axially undisplaceably, increases the production costs of the valve insert. Also the mounting costs are relatively high, as it must be observed that the nose on the ring engages the corresponding recess on the housing. It is possible to do this with automatically working mounting tools, but considerable costs are involved, as the ring must be handled separately.

The purpose of the invention is to provide a simple way of securing the positioning of the connection profile in relation to the housing.

With a valve as described in the introduction, this task is solved in that the stop comprises a deformation zone, which is deformable at least in the axial direction when a certain predetermined screwing torque is exceeded.

Now the valve insert can be screwed into the housing until valve insert and housing are bearing against one another at the stop. As soon as this position has been reached, a further screwing is normally no longer possible. An increase in the screwing torque would then lead to a damage of valve insert or housing. However, it will then be left to coincidence, whether or not the connection profile has the desired positioning in relation to the housing. With the solution according to the invention, it is now possible to go on turning the valve insert until the connection profile has the desired positioning in relation to the housing. True enough, a higher screwing torque will be required for this. With the known valve this screwing torque would lead to a damage. With the deformation zone according to the invention, however, this problem will be avoided. The stop can be deformed to a certain degree. As mentioned, this deformation will require a higher screwing torque, but at the same time it is secured that the valve insert is fixed in the housing with the required force, and cannot be unscrewed during operation. Normally, the angle with which the valve insert must be turned to position the connection profile in relation to the housing is not very big. Correspondingly, the stop will not be extremely deformed in the deformation zone. Normally, it is a question of a fraction of a millimetre. In most cases this causes that the deformation of the stop remains elastic in the deformation zone. Thus the stop acts as a spring, i.e. it also secures that the valve insert is not accidentally unscrewed from the housing.

Preferably, the predetermined screwing torque is higher than any unscrewing torque, which can be produced manually via the operating element. When setting the valve, either direct or through insertion of a reference value, the user will turn a part of the operating element. When, in doing this, he reaches the stop, he will impose a turning torque on the valve element. When providing that the screwing torque, with which the valve insert is screwed into the housing until reaching the stop, is higher than an obtainable unscrewing torque, an accidental unscrewing can also be avoided, when the connection profile after mounting should happen to have the correct positioning in relation to the housing.

Advantageously, the deformation zone of the stop is a wall extending in the circumferential direction, said wall forming a ring chamber in the radial direction with the part on which it is fixed. This wall thus makes out part of the stop. It is stable enough to take up the first screwing torque, i.e. the torque with which the valve insert is mounted in the housing until reaching the stop. An increase in the screwing torque may cause a deformation of this wall, by which the ring chamber gives way to the wall, in order that the deformation does not involve damaging of other parts.

Preferably, the wall is closed in the circumferential direction. This increases the resistance towards deformation. Individual parts cannot so easily deflect towards the outside. On the contrary, the wall will be additionally compressed during deformation.

Advantageously, the wall will be inclined in relation to a surface forming a counterstop. This increases the opportunities of the wall of giving way and deforming when an axial pressure is applied. Thus, this wall is actually forming a share of a cone. This cone can then expand a little, when the increased screwing torque is imposed. In this way an elastic deformation corresponding to the effect of a ringshaped spring is easily realised.

For this purpose, it is especially preferred that the surface forming the counterstop is essentially arranged vertically to the central axis. The force imposed through the screwing is then directed vertically to the surface forming the counterstop. This gives a defined co-ordination of the directions of the forces, which influence the deformation zone of the stop.

The stop can be made in one unit with the housing or with the valve insert. In this case the handling of an additional part is no longer necessary.

However, the stop can also be arranged as an additional part on the housing or on the valve insert. This leaves a more free choice of the material, of which the stop is made. Nothing is preventing the use of other materials than those used for the housing or the valve insert. The handling of the additional part is less critical. In many cases it is sufficient to plug in the additional part on the valve insert.

Preferably, the additional part is made of a material, which is softer than the materials of the housing and the valve insert. The deformation is then limited to the additional part, whereas housing and valve seat will not be deformed, even though the screwing torque is increased.

Advantageously, the part carrying the additional part has a stop surface which is essentially parallel to the surface forming the counterstop. When screwing, parallel surfaces will thus be moved towards each other. Then substantially only external forces exist, which extend parallel to the central axis. Forces originating from or being redirected by the additional part are then contributing to the deformation work. All tensions appearing during the positioning of the valve insert in relation to the housing only occur in the deformation zone of the stop.

Preferably, a supporting surface effecting the additional part radially on the inside is arranged on the part carrying the additional part. This gives an internal radial limit of the deformation of the stop. The deformation can then be directed in a definite direction, and can thus be controlled better.

It is also an advantage that the radial inner wall of the additional part, acting together with the supporting surface, is at least partly inclined towards the supporting surface. This will permit a tilting motion of the stop so that radial tensions applied on the valve insert or the housing by the additional part (depending on the part carrying the additional part) can be kept relatively low.

It is also advantageous when, on one of its ends the additional part has an extension in the radial direction. In the area of this extension the additional part has an improved resistance against deformations. These deformations are then limited to a clearly defined section outside this extension.

Preferably, the radial outer side of the extension is angled in relation to the remaining radial outer wall. Thus the tension course occurring in the stop at a deformation of the stop can be foreseen.

Advantageously, a sealing is arranged radially inside the stop. When a radial supporting surface is not provided, this sealing, which can for instance be an O-ring, can be used for holding the additional part in its radial position.

In the following the invention is described on the basis of preferred embodiment examples in connection with the drawing, showing in:
- fig. 1: a top view of a thermostatic radiator valve
- fig. 2: a schematic view of a section of a valve
- fig. 3: view of a detail of fig. 2
- fig. 4: section of a part of a valve insert
- fig. 5: various embodiments of the additional part

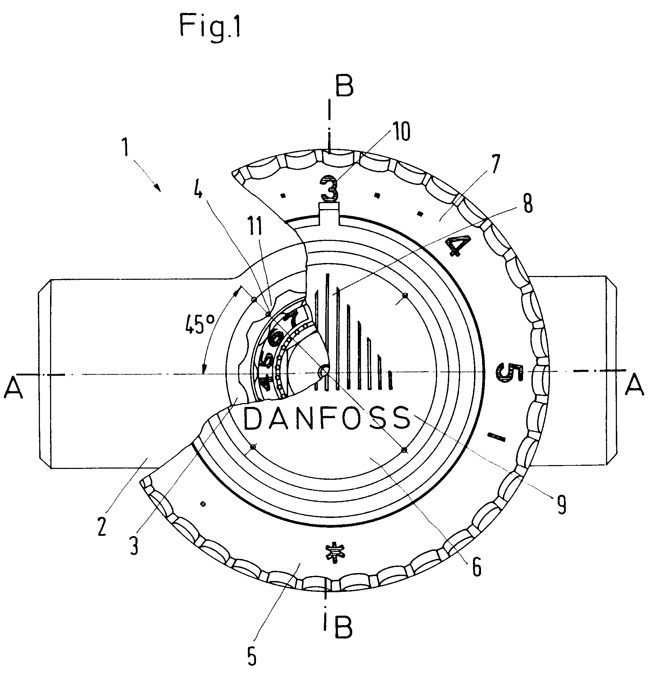

Fig. 1 shows a radiator valve 1, made for building in, with a housing 2 and a valve insert 3. The valve insert 3 has a connection profile 4 consisting of, for instance, a number of recesses 11 arranged evenly in the circumferential direction, the cross section of said recesses having in this case a circular line as limit. The valve insert 3 carries an operating element 5 comprising a stationary part 6 and an adjustment handle 7. The stationary part 6 has an internal profile (not shown) complementary to the connection profile 4. Thus the angular position of the connection profile 4 in relation to the housing 2 also determines the positioning of the stationary part of the operating element 5 in relation to the housing 2. Thus the connection profile 4 has two tasks. One is being the determining element for the positioning of the operating element 5 in relation to the housing 2. The other is to absorb torques influencing the operating element 5 when the adjustment handle 7 is operated.

The stationary part 6 of the operating element 5 bears a stationary marking 8, which is in this case a triangle. Below this triangle there is a name 9. This name should possibly be arranged horizontally, and the top of the marking 8 should point upwards. The latter bears the advantage that the user can rely on the fact that it is sufficient to place a marking 10 in a certain position, namely the upper position, to set the reference value for the room temperature. He no longer has to take care that the marking 10 is brought to overlapping the top of the marking 8. This is especially of advantage when the shifting of the adjustment handle 7 is usually made in more rooms. The positioning of the name 9, however, is only important for aesthetic reasons.

When positioning the connection profile 4 to the housing 2, it must, in this case, be considered that the angle between a recess 11 and an axis A-A is 45°. Then the top of the arrow forming the marking 8 is lying on a vertical line B-B.

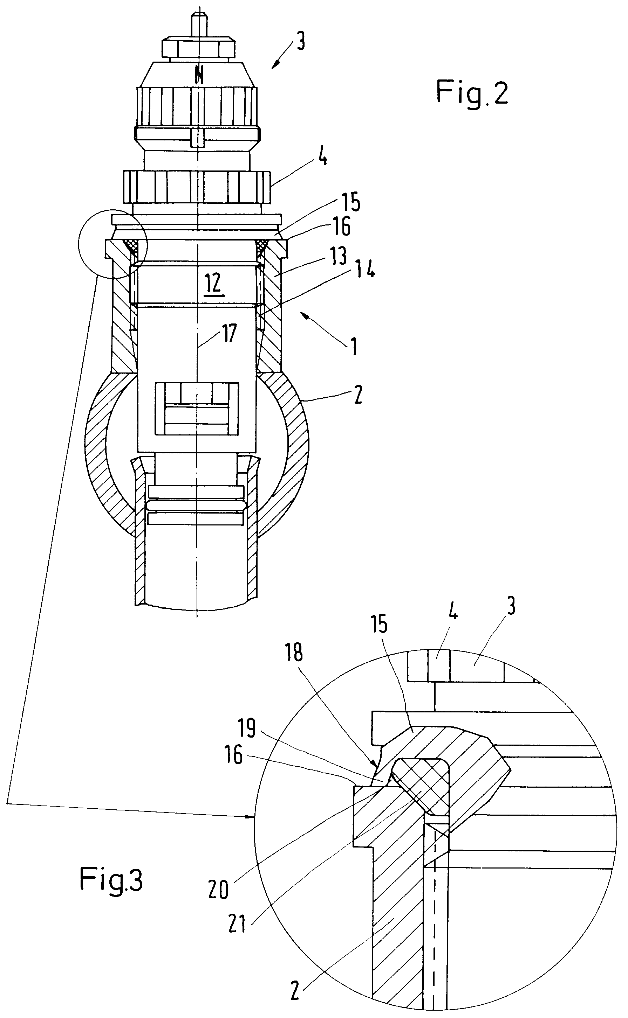

The way of meeting this demand is shown in fig. 2 and 3.

Fig. 2 shows that the valve insert 3 is screwed into the housing 2. For this purpose the valve insert 3 has an external thread 12 and the housing 2 has, in a connecting piece 13, an internal thread 14. The remaining elements of the valve insert 3 are only shown schematically, and are of minor importance for the invention in question.

The valve insert 3 is screwed into the housing 2, until a stop 15 is bearing against the housing 2. For this purpose a surface 16 forming a counterstop is provided on the housing 2, said counterstop being essentially vertical to the central axis 17 of the valve insert 3.

The construction of the stop 15 can be seen from fig. 3. The stop has a deformation zone 18, made as a circumferential wall 19, which again forms a ring room 20 together with the valve insert 3. A sealing 21, for instance an O-ring, can be arranged in the ring room 20. Preferably the wall 19 is closed in the circumferential direction. The wall 19 is somewhat inclined in relation to the surface 16, and is thus extending towards the surface 16 from the inside to the outside, when seen from the valve insert 3.

It is shown that the stop 15 is arranged on the valve insert 3. In the same way, it is also possible to place the stop 15 on the housing 2. In this case the counterstop should be provided on the valve insert 3.

The shown construction of the stop 15 with a deformation zone 18 now enables the following mounting: The valve insert 3 is screwed into the housing, until the stop 15 is bearing against the surface 16. This requires a predetermined screwing torque, e.g. 30 Nm. This torque is high enough to prevent a manual unscrewing of the valve insert 3 from the housing 2, for instance through an excessive turning of the operating element 5. For the mounting for instance the connection profile 4 can be used, on which a corresponding tool is engaged.

When this position has been reached, the connection profile 4 will only in exceptional cases have the correct positioning in relation to the housing 2. Thus, it will be necessary to position the valve insert 3 in relation to the housing 2. This is made by tightening the valve insert with an even higher torque, e.g. 60 Nm, i.e. turning it until the desired positioning of the connection profile 4 in relation to the housing 2 has been reached. For instance, the lowest spot of a recess 11 must have an angle of 45° in relation to the line A-A of the housing 2. However, this can also be reached easily on automatically working mounting installations through an optical or mechanical monitoring of the position of the recesses 11 of the connection profile 4. When the connection profile 4 is used for screwing, the position can also be determined by means of the position of the mounting tool.

Normally, screwing of one part into another exceeding a certain stop will lead to a damaging of one of the two parts. In this case, however, this is prevented by the stop 15 having the deformation zone 18, which can be deformed when the valve insert is screwed further into the housing. In this case the deformation of the deformation zone 18 is plastic, leading to a current counterforce being exerted on the valve insert, which causes the torque required for the unscrewing to increase further.

In most cases the deformation of the deformation zone 18 is not excessively large. As can be seen from fig. 1, the connection profile 4 has a series of recesses 11, placed at relatively small angle distances from each other, e.g. 30°. The largest turning movement to be performed by the valve insert 3 in relation to the housing 2 will then be for instance 30°. With a corresponding thread pitch of the external and internal threads 12, 14, the longitudinal change to be absorbed by the deformation zone 18 is relatively small. It is in the order of a fraction of a millimetre. Thus, for one the deformation of the deformation zone 18 remains plastic. Secondly, it is secured that practically all tensions on the deformation zone 18 remain limited. Thus, the valve insert and the housing can be protected against damaging.

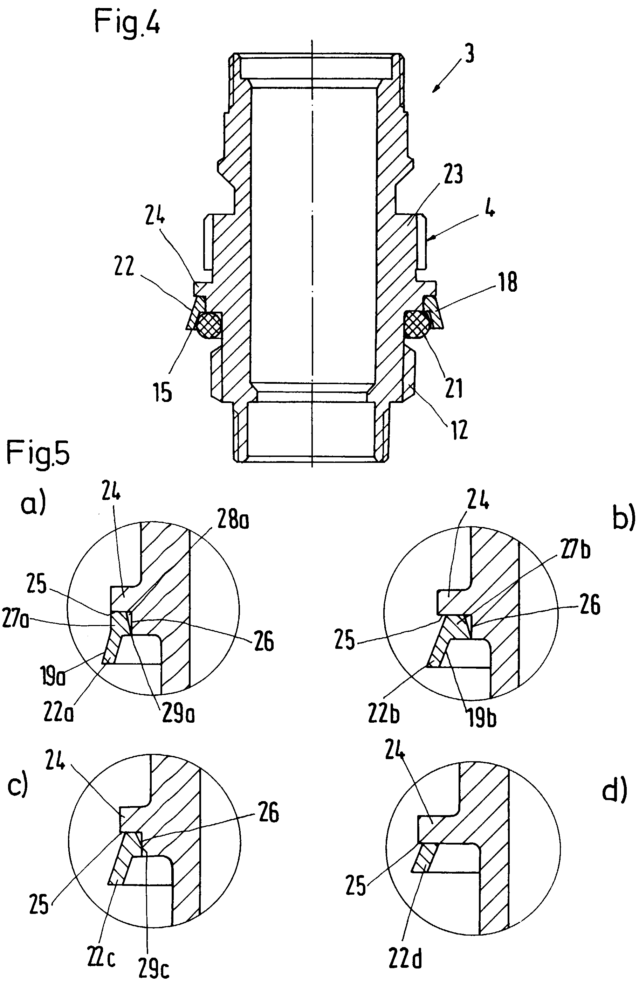

In fig. 3 it is shown that the stop 15 with the deformation zone 18 is an integral part of the valve insert 3. Fig. 4 shows an alternative embodiment of a valve insert 3, in which an additional part 22 is used as stop 15. This additional part 22 can be made in different ways, as shown in detail in fig. 5.

The valve insert 3 has a valve housing 23, the circumferential wall of which carries the connection profile 4. This valve housing 23 has a circumferential projection 24, on the bottom side of which a stop surface 25 is provided, which is essentially parallel to the surface 16 on the housing 2.

In the embodiments in fig. 5a and 5c a supporting surface 26 is further provided, which is made as a circumferential wall on the valve housing 23, parallel to the axis, and is acting radially on the inside of the additional part 22. Thus, the deformation of the additional part 22, occurring at mounting with increased screwing torque, will be limited to an inward direction.

In the embodiment according to fig. 5d, this supporting surface 26 is missing. The radial positioning of the additional part 22 can then, for example, take place through the sealing 21.

In the following the various constructions of the additional parts 22 will be explained by means of fig. 5. For this purpose, these additional parts will be provided with letters, associated with the corresponding parts of fig. 5.

The additional part 22a in fig. 5 shows a circumferential wall 19a inclined towards the outside, forming the proper deformation zone and the stop. On its upper end, the wall 19a has an increase of its thickness 27a, the radial outside of which, together with the radial outside of the wall 19a, forms an obtuse angle. Thus, a tension course in the additional part 22a can already be foreseen. On the radial inside of the thickness increase 27a, the additional part 22a is also inclined, however in the opposite direction of the inclination of the wall 19a. This will leave a free space 28a, into which the additional part 22a can be deformed, when it is compressed through the application of a higher turning torque. The additional part 22a is then, in a manner of speaking, tilted around a base 29a. This is the point, in which the additional part 22a and the valve housing 23 are bearing against each other in the radial direction, or will be bearing against initially at a deformation in the radial direction.

The additional part 22b deviates from the additional part 22a in that the thickness increase 27b on the radial outside has the same inclination as the wall 19b.

Essentially, the additional part 22c corresponds to the additional part 22b. However, here the base 29c has been extended in the radial direction.

The additional part 22d, on the other hand, works without a thickness increase. Neither is a supporting surface 26 required.

## Claims

1. Valve, especially for building in, with a housing and a valve insert, which is screwed into the housing and which comprises a connection profile for an operating element, whereby the housing and the valve insert are bearing against one another at a stop, **characterised in that** the stop (15) comprises a deformation zone (18), which is deformable at least in the axial direction when a certain predetermined screwing torque is exceeded.

2. Valve according to claim 1, **characterised in that** the predetermined screwing torque is higher than any unscrewing torque which can be produced manually via the operating element (5).

3. Valve according to claim 1 or 2, **characterised in that** the deformation zone (18) of the stop (15) is a wall (19) extending in the circumferential direction, said wall forming a ring chamber (20) in the radial direction with the part on which it is fixed.

4. Valve according to claim 3, **characterised in that** the wall (19) is closed in the circumferential direction.

5. Valve according to claim 3 or 4, **characterised in that** the wall (19) is inclined in relation to a surface (16) forming a counterstop.

6. Valve according to claim 5, **characterised in that** the surface (16) forming the counterstop is essentially arranged vertically to the central axis.

7. Valve according to one of the claims 1 to 6, **characterised in that** the stop (15) is made in one unit with the housing (2) or the valve insert (3).

8. Valve according to one of the claims 1 to 6, **characterised in that** the stop is arranged as an additional part (22) on the housing (2) or on the valve insert (3).

9. Valve according to claim 8, **characterised in that** the additional part (22) is made of a material which is softer than the materials of the housing (2) and the valve insert (3).

10. Valve according to claim 8, **characterised in that** the part (3) carrying the additional part (22) has a stop surface (25) which is essentially parallel to the surface (16) forming the counterstop.

11. Valve according to one of the claims 8 to 10, **characterised in that** a supporting surface (26) effecting the additional part (22) radially on the inside is arranged on the part (3) carrying the additional part (22).

12. Valve according to claim 11, **characterised in that** the radial inner wall of the additional part (22) acting together with the supporting surface (26), is at least partly inclined towards the supporting surface.

13. Valve according to one of the claims 8 to 12, **characterised in that** on one of its ends the additional part (22) has an extension (27) in the radial direction.

14. Valve according to claim 13, **characterised in that** the radial outside of the extension (27) is angled in relation to the remaining radial outer wall.

15. Valve according to one of the claims 1 to 14, **characterised in that** a sealing (21) is arranged radially inside the stop (15).
